# EUROPEAN PATENT APPLICATION

(11) **EP 3 255 579 A1**
(43) Date of publication of application: **13.12.2017**
(21) Application number: 16305661.7
(22) Date of filing: 07.06.2016
(51) Int. Cl.: G06F 21/77, G06Q 20/34, H04L 9/08, H04L 9/32, H04L 29/06, H04W 4/00, H04W 12/04

(54) **DEVICE SELF PERSONALIZATION**

(71) Applicant: GEMALTO SA, 92190 Meudon (FR)
(72) Inventor: GIRARD, Pierre, 13881 Gemenos Cedex (FR); JUTARD, Laurent, 13881 Gemenos Cedex (FR)

(57) **Abstract**

The present invention relates to a method to self-personalize a machine-to-machine connected device (Di), comprising the steps of, during manufacturing process, flashing the device (Di) with a same embedded information including a secret as for a batch of other devices using a same flash image, and then, at testing phase, use said secret to generate an authentication material to be used in authentication with a dedicated server (SV) and delete said secret.

## Description

### FIELD OF THE INVENTION

The present invention relates to a method to self-personalize a machine-to-machine connected device. The terms "machine-to-machine connected devices" designates any module or device or apparatus to be connected in an internet of things network.

The invention also pertains to a module implementing said method.

### BACKGROUND OF THE INVENTION

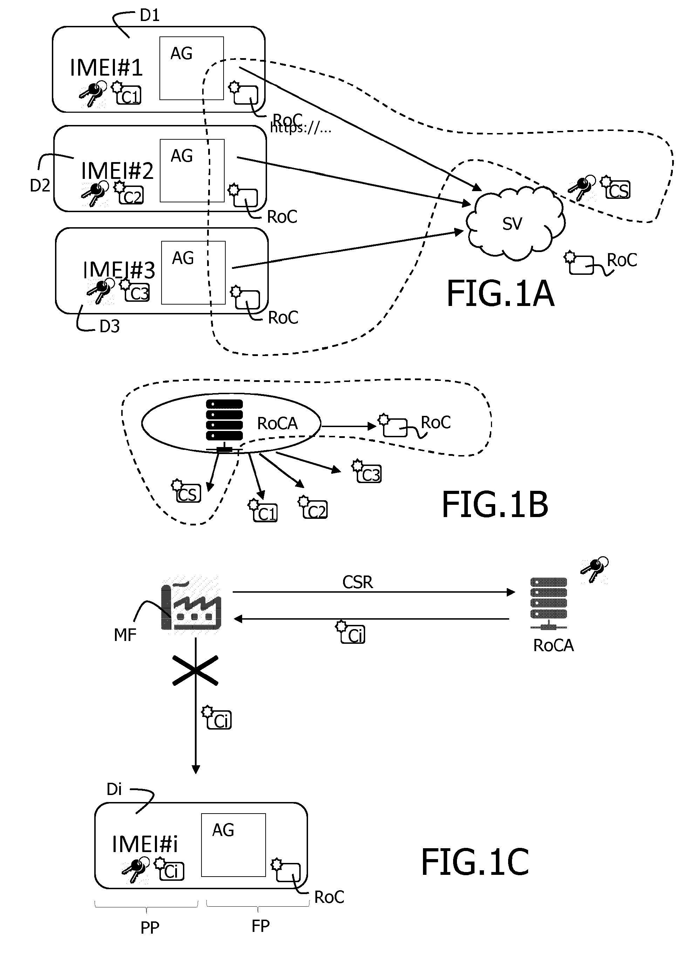

Figure 1A represents the environment in which the invention takes place in asymetric cryptography. It comprises a server side SV and terminals and/or devices Di having agents AG and associated to an identifier IMEI#i. It is typically modules of internet of things. Currently, the cryptographic material is limited to the ones circled in dashed line. The server side SV has its key pair and server certificate and provides devices Di with a root signed certificate RoC which is the same for all devices. The cryptographic infrastructure is the one in the dashed line on figure 1B. A root certification authority only signs a same certificate for all devices and provides a server certificate CS to the server side SV.

This current situation provides TLS server authentication based on the root certificate only and no client side authentication at TLS level. The client is identified only by IMEI, not even through password authentication.

The invention concerns machine to machine module and more generally internet of things terminals and devices that need to be personalized, in particular for security purpose. Indeed, in order to have a secure authentication of the devices on the field, modules/devices need to contain a unique secret, i.e. private key or secret key.

Client authentication necessitates the provision of an own key pair and an own certificate per each client/agents AG. In such an architecture, the server side SV has also its own key pair and certificate. It is shown on figure 1A.

The use of such an asymmetric cryptography scheme as shown on figure 1B is known to perform secure client authentication. A root certification authority RoCA produces a self-signed root CA certificate RoC shared by all entities of the environment and provides a server certificate CS to the server and also a own device certificate Ci to each of the devices Di. The resulting situation is shown on figure 1A. This requires an in-factory personalization.

However such a direct in-factory personalization in M2M/internet of things modules is not possible. This is illustrated on figure 1C. Ideally a manufacturing entity MF, typically a factory, should be able to ask a root certification authority RoCA to sign a certificate Ci for the count of each device Di using a certificate signing request CSR. The RoCA then should be able to return the signed certificate Ci to the manufacturing entity MF to be pushed during a personalization phase in the device Di. The device Di thus would have a fixed part FP and a personalized part PP.

This architecture which provides great security is possible in other fields but is not possible for M2M modules and an alternative is needed while taking into account that a device/module per device/module personalization is not possible.

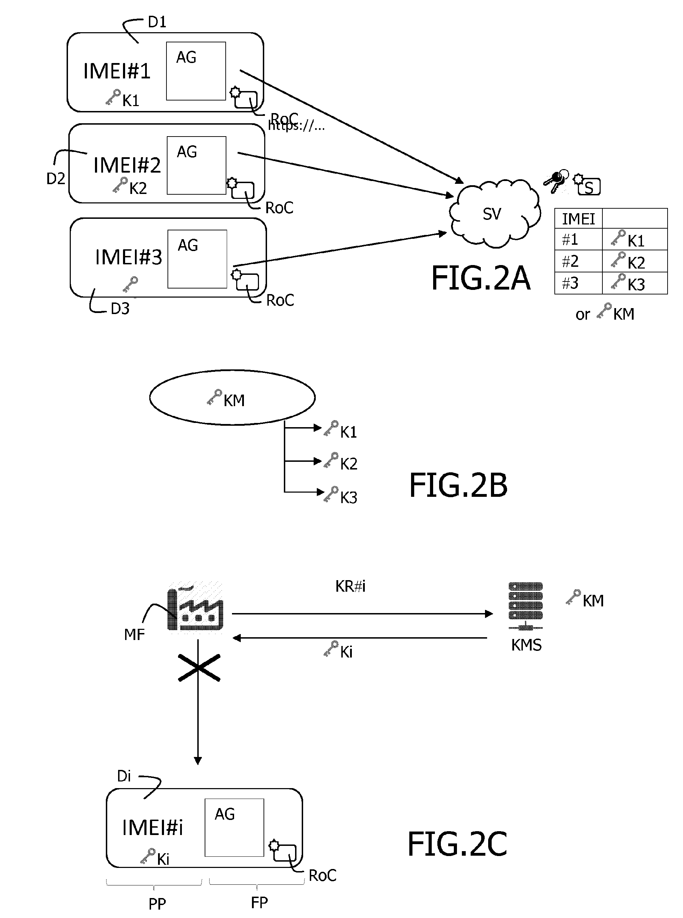

Figure 2A represents again the environment in which the invention takes place and a currently non-reachable solution for client authentication in such an environment in symmetric cryptography. Here a certificate is supposed to be still used for server authentication as shown in the dashed circle on figure 1A.

In symmetric cryptography, in the case M2M modules/devices Di could be personalized, each agent AG would have a secret key Ki, shared with the server side SV which would store all secret keys for each module Di. At least the server side stores a mother key KM and has derivation means to be able to derive any device secret key Ki. The key hierarchy is shown on figure 2B. Devices' secret keys Ki are derived with IMEI from a mother key KM of the server side SV.

Currently the flow as shown on figure 2C is not possible where a key request KR#i is done for device Di from a manufacturing entity MF to a key management service KMS which is able to derive any device key Ki from a mother key KM and IMEI#1 of device Di. The device key Ki would then be provided by the manufacturing entity MF to be then pushed to the device Di. A fixed part FP and a personalized part PP is thus obtained in the device Di. However, such a personalization is not possible currently.

Here also, the architecture would provide great security as in other fields but it is not possible for M2M modules and an alternative is needed while taking into account that a device/module per device/module personalization is not possible.

### SUMMARY OF THE INVENTION

The present invention aims to enabling a personalization of M2M modules while coping with the limitation in manufacturing entities which manufacture such modules and M2M devices.

The present invention is defined, in its broadest sense, as a method to self-personalize a machine-to-machine connected device, comprising the steps of, during manufacturing process, flashing the device with a same embedded information including a secret as for a batch of other devices using a same flash image, and then, at testing phase, use said secret to generate an authentication material to be used in authentication with a dedicated server and delete said secret.

With the invention, each device has its own key pair and certificate or secret key and TLS client authentication is enabled while no personalization is needed as same data is flashed for devices in a batch.

In the first embodiment, the same embedded information being a same embedded sub-certification authority certificate and a same sub-certification authority pair of keys as for a batch of other devices using a same flash image, the method comprises, at testing phase, the steps of generating at least one own pair of keys onboard, of signing the public key of the generated pair of keys with the sub-certification authority private key to create a device certificate as authentication material to be sent with the embedded sub-certification authority certificate to be checked at the dedicated server and of deleting the sub-certification authority private key at the machine-to-machine connected device.

This embodiment corresponds to asymmetric cryptography. Each device of a batch is flashed with an embedded sub-CA certificate along with the corresponding key pair thus forming a local sub-certification authority CA. As the flash image is the same for the whole batch, no personalization is necessitated. At the testing phase, the device generates its own key pair and certifies it with the stored private key associated to the sub-CA certificate. Then the private key corresponding to the sub-CA certificate is deleted. The additional onboard operations of the invention require additional process at test time for better security. One of the risks is a potential exposure of the sub-CA certificate private key in the factory. The invention also requires the presence of a PK on board key generator (OBKG), of signature means in the module.

By proposing to use one sub-CA certificate per batch, the invention limits risk if the associated private key leaks. Also the secure erase of sub-CA private key after testing mitigates risks.

In a second embodiment, the same embedded information being a same batch mother key as for a batch of other devices using a same flash image, the method comprises, at testing phase, the steps of deriving an own device key onboard from at least the batch mother key and an identifier of the device, and deleting the batch mother key at the machine-to-machine connected device, said device key being used later to create a secure channel.

Here, the device is flashed with a batch mother key, the same flash image being used for all devices and, thus, no personalization being required. At the testing phase, the device derives its own key and then the batch mother is erased.

Such operations are fast to perform and negligible additional process at test time is requested. Again, it remains possible that the batch mother key is exposed in the factory. Also the invention requires a PSK cipher suite in the module. It is currently not always supported, e.g. in J2ME, additional lib like Bouncy Castle should be loaded. Here also the use of one mother key per batch and the secure erase of batch mother key limit risk if this key leaks.

The present invention also relates to a machine-to-machine connected module, having a memory to store a same embedded self-personalization information including a secret as for a batch of other devices using a same flash image, and dedicated testing module adapted to trigger the generation of an authentication material to be used in authentication with a dedicated server and to delete said secret.

Such a module is able to personalize itself during the test phase according to the method of the invention.

In a first embodiment, the same embedded information being a same embedded sub-certification authority certificate and a same sub-certification authority pair of keys, the M2M connected module further comprises a key generator triggered by the testing module to generate at least one own pair of keys onboard and a cryptographic module adapted to sign the public key of the generated pair of keys with the sub-certification authority private key to create a device certificate as authentication material to be sent with the embedded sub-certification authority certificate.

Such a module is a device able to or is implemented in a device able to implement an asymmetric client authentication according to the principle of the invention.

In a second embodiment, the same embedded information being a same batch mother key as for a batch of other devices using a same flash image, further comprising a key derivation module to derive a key from the stored batch mother key and an identifier of the device.

Such a module is a device able to or is implemented in a device able to implement a symmetric client authentication according to the principle of the invention.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1A represents the environment in which the invention takes place and a currently not reachable solution for client authentication in such an environment in asymmetric cryptography;
- Figure 1B represents the corresponding PKI infrastructure;
- Figure 1C shows a situation which is not reachable currently;
- Figure 2A represents the environment in which the invention takes place and a currently non-reachable solution for client authentication in such an environment in symmetric cryptography;
- Figure 2B represents shows the corresponding key hierarchy;
- Figure 2C shows a situation which is not reachable currently;
- Figure 3 represents the new PKI infrastructure proposed by the invention;
- Figure 4A illustrates the first step of the method of the invention;
- Figure 4B illustrates the second step of the method of the invention;
- Figure 4C shows the resulting situation in terms of key provision in the different entities of the invention;
- Figure 5 shows the new key hierarchy;
- Figure 6A illustrates the first step of the method of the invention;
- Figure 6B illustrates the second step of the method of the invention.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

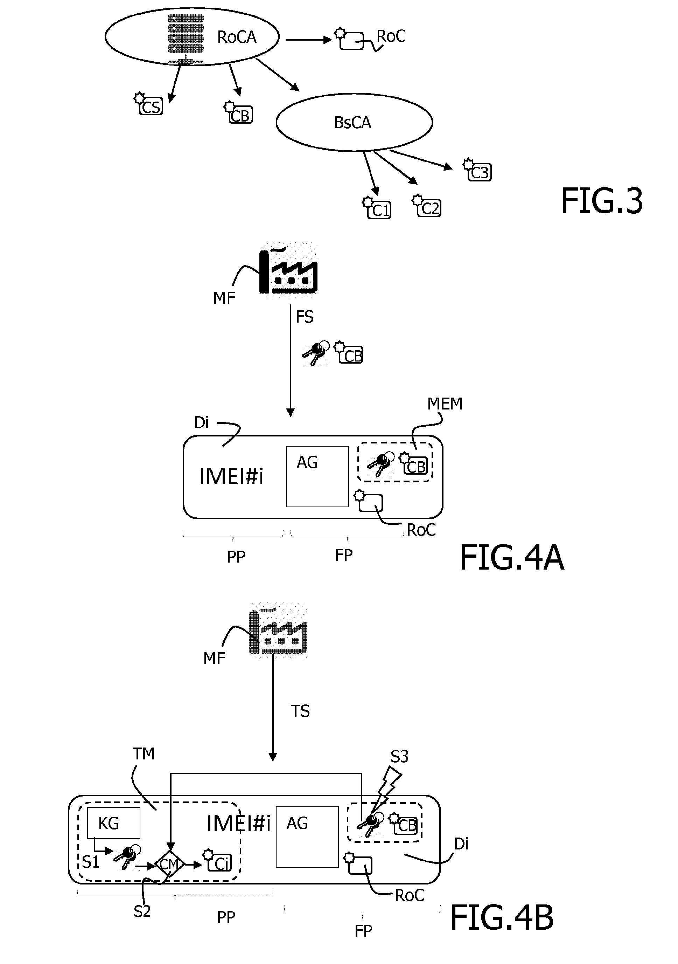

Figure 3 represents the new PKI infrastructure proposed in the invention. A central root certification authority RoCA is able to produce a server certificate CS and a self-signed root CA certificate RoC according to the state of the art. A sub-certification authority BsCA is used according to the invention for each batch of devices. The central root certification authority RoCA is further adapted to produce batch sub-certification authority (sub-CA) certificate CB. This batch sub-CA certificate CB is dedicated to be pushed in all devices of a given batch along with an associated key pair. Therefore each device of the batch embeds the batch sub-certification authority BsCA.

According to the invention, such batch sub certification authority BsCA is able to produce certificates Ci for each device Di where BsCA was stored.

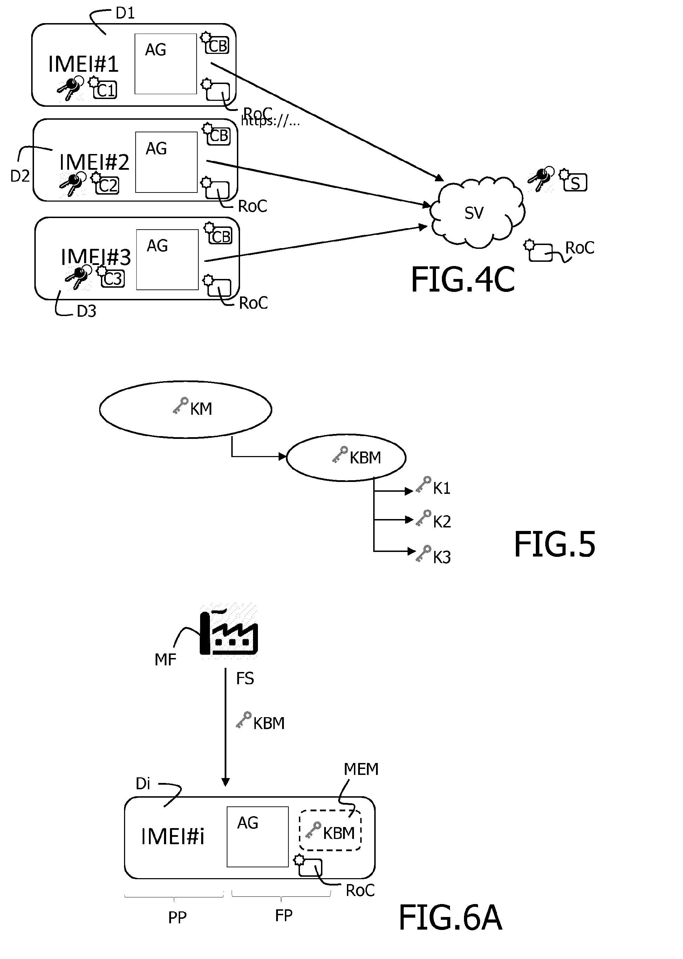

The implementation of the invention among devices is illustrated on figure 4A, 4B and 4C. Figure 4A illustrates the first step of the method of the invention. It consists in a flashing step FS where the batch sub certificate CB is stored with the corresponding key pair in every device Di of a batch. Such an operation is compatible with the current manufacturing facilities. The batch sub-CA certificate is thus embedded in each device and stays in the device. It will be provided along with the later generated device certificate and the root certificate RoC to a server side SV at each authentication. This set of certificate is called the certificate chain.

Then, as shown on figure 4B, a test step is realized. The invention exploits this step to trigger a key generator KG to produce a pair of keys in a step S1. Then in a step S2, a certificate Ci is generated from the public key of the generated key pair and typically an identifier. This certificate Ci is signed using batch private key corresponding to the batch sub-CA certificate CB. Then, in a step S3, the key pair of the batch is deleted.

Figure 4C shows the resulting situation. A full client authentication is accessible with the help of pair of key and certificate Ci in each device Di. Each agent AG has its own key pair and certificate with the invention. A certificate chain is thus available at each device to perform an authentication. For this authentication, at the server side, the received root certificate RoC is first checked, then the sub-CA certificate which was signed by the RoCA, typically using the secret key associated to the root certificate RoC, is checked and the public key of the batch is extracted. At last, the device certificate Ci will be checked using the sub-CA certificate and the extracted batch public key.

To store the received sub-CA certificate CB, the device Di comprises a memory MEM. It further comprises a testing module TM triggering the key generator KD and a cryptographic module CM to sign the generated public key using the private key of the sub-certification authority as stored in memory. Advantageously at least an identifier is joined to the public key before signature.

Figure 5 shows the new key hierarchy according to the invention in symmetric cryptography. Where batch mother keys KBM are derived from a mother key KM, said batch mother key KBM being common to all devices of a batch. Advantageously the batch mother key KBM is derived using batch serial number. Then batch mother key is used to derive as many device keys as there are devices Di in the batch. Device keys are advantageously derived with the IMEI.

Figure 6A shows the first step FS of the invention where the batch mother key KBM is flashed is all devices Di of a same batch.

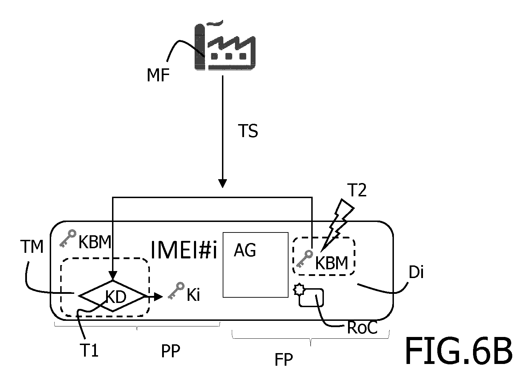

Then, as shown on figure 6B, a testing step TS is performed where a key derivation step T1 from the batch mother key KBM and from an identifier of the device Di is triggered in a key derivator KD. This results in the generation of a device secret key Ki to be stored in the device Di. Then in a step T2, the batch mother key KBM is deleted. Only the derived secret key Ki is kept and used by the device Di to authenticate to the server side SV which has also means to derive any device secret key from the mother key KM using an identifier received from the device Di, typically the IMEI.

The situation as shown on figure 2A is thus reached where the array of secret device keys is pre-generated or generated on the fly from mother key KM and using an identifier. Each agent AG in each device Di has its own secret key Ki.

The device Di comprises a memory MEM to store the private batch mother key KBM when flashed. Further a testing module TM triggers the key derivation KD in the device Di.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted, along with the full range of equivalents to which the claims are entitled.

## Claims

1. Method to self-personalize a machine-to-machine connected device (Di), comprising the steps of, during manufacturing process, flashing the device (Di) with a same embedded information including a secret as for a batch of other devices using a same flash image, and then, at testing phase, use said secret to generate an authentication material to be used in authentication with a dedicated server (SV) and delete said secret.

2. Method according to claim 1, wherein with the same embedded information being a same embedded sub-certification authority certificate (B) and a same sub-certification authority pair of keys as for a batch of other devices using a same flash image, the method comprises, at testing phase, the steps of generating (S1) at least one own pair of keys onboard, of signing (S2) the public key of the generated pair of keys with the sub-certification authority private key to create a device certificate (Ci) as authentication material to be sent with the embedded sub-certification authority certificate (B) to be checked at the dedicated server (SV) and of deleting the sub-certification authority private key at the machine-to-machine connected device.

3. Method according to claim 1, wherein, the same embedded information being a same batch mother key (BM) as for a batch of other devices using a same flash image, the method comprises, at testing phase, the steps of deriving (T1) an own device key (Ki) onboard from at least the batch mother key (BM) and an identifier (IMEI) of the device, and deleting (T2) the batch mother key (BM) at the machine-to-machine connected device (Di), said device key (Ki) being used later to create a secure channel.

4. Machine-to-machine connected module (Di), having a memory (MEM) to store a same embedded self-personalization information including a secret as for a batch of other devices using a same flash image, and dedicated testing module (TM) adapted to use said secret to generate an authentication material to be used in authentication with a dedicated server and to delete said secret.

5. Machine-to-machine connected module according to claim 4, the same embedded information being a same embedded sub-certification authority certificate (CB) and a same sub-certification authority pair of keys, the M2M connected module further comprises a key generator (KG) triggered by the testing module (TM) to generate at least one own pair of keys onboard and a cryptographic module (CM) adapted to sign the public key of the generated pair of keys with the sub-certification authority private key to create a device certificate (Ci) as authentication material to be sent with the embedded sub-certification authority certificate (CB).

6. Machine-to-machine connected module according to claim 4, the same embedded information being a same batch mother key (BM) as for a batch of other devices using a same flash image, further comprising a key derivation module (KD) to derive a device key (Ki) from the stored batch mother key (BM) and an identifier of the device (IMEI).
